# EUROPEAN PATENT SPECIFICATION

(11) **EP 1 479 192 B1**
(45) Date of publication and mention of the grant of the patent: **07.01.2009**
(21) Application number: 02702658.2
(22) Date of filing: 09.01.2002
(51) Int. Cl.: H04L 12/24

(54) **METHOD AND APPARATUS FOR MANAGING CONFIGURATION OF A NETWORK**
VERFAHREN UND SYSTEM ZUR VERWALTUNG VON KONFIGURATION IN EINEM NETZWERK
PROCEDE ET DISPOSITIF DE GESTION DE LA CONFIGURATION D'UN RESEAU

(43) Date of publication of application: 24.11.2004
(73) Proprietor: TELEFONAKTIEBOLAGET LM ERICSSON (publ), 164 83 Stockholm (SE)
(72) Inventor: MOLNAR, Gergely, H-1077 Budapest (HU)
(74) Representative: Tonscheidt, Andreas
(86) International application number: PCT/IB2002/000740
(87) International publication number: WO 2003/058884

(56) References cited:
- US-A- 6 101 538
- HEGERING H-G ET AL: "DESCRIBING AN SOI NETWORK CONFIGURATION - PROBLEMS AND POSSIBLE SOLUTIONS -" , COMPUTER COMMUNICATION TECHNOLOGIES FOR THE 90'S. TEL AVIV, OCT. 30 - NOV. 3, 1988, PROCEEDINGS OF THE INTERNATIONAL CONFERENCE ON COMPUTER COMMUNICATION, AMSTERDAM, ELSEVIER, NL, VOL. CONF. 9, PAGE(S) 288-293 XP000077388 abstract page 289, column 2, line 31-39 page 292, column 2, paragraph 3.4 -page 293, column 1, paragraph 3.4

## Description

The present invention relates to a method and apparatus for managing configuration of a network.

The invention finds application in the field of telecommunication networks. It is described here, by way of non-limiting example, in its application to a network of the Internet type.

Internet Protocol (IP) is a communication protocol that interconnects various hosts. In general, IP hosts are computers implementing an IP protocol stack and applications.

A set of directly connected hosts, e.g. a set of hosts sharing a single cable, are able to communicate directly with each other. Such a construction is called an IP network or sub-network, or simply an IP subnet.

In the case where these hosts are not connected directly, e.g. there are two separated physical links, additional equipment is needed in order to provide IP connectivity between the hosts on these physically separated IP subnets. Such additional equipment is referred to as a router.

A router connects a plurality of IP subnets and enables hosts of different subnets to "talk" to each other through the router.

The router is a computer having hardware and software adapted to forward received IP packets sent by the hosts.

As is well known by a person skilled in the art, routers support protocols, services and many other functions. The operation of these functions is controlled by variables and parameters.

A set of values of these variables and parameters is a configuration. The network administrator controls the operation of a router through configuration management, i.e. by setting and changing these values. Configuration management of a router is called "element configuration management".

Configuration of routers and hosts in a network is called "network configuration". It has the meaning of planning and setting functionalities of the network which are valid for the whole managed network or part of it. Such functionalities include for instance routing protocols, forwarding policies, virtual private networks, features relating to quality of service, etc. Moreover, there are link-related configurations, e.g. IP over Point-to-Point connections. Each router has its individual part of configuration, such as special attributes of layer 1, layer 2 interfaces, software configuration, etc.

There are currently many known ways to manage IP based data communication networks, belonging basically to two main categories: manual configuration methods and indirect configuration methods. In manual configuration methods, the network administrator accesses a network device to be managed and, using an element management method, he sets the attributes to be configured. In indirect configuration methods, the network administrator uses an application to access the network device to be configured and to carry out the element management. The network device is thus managed indirectly by the network administrator.

An important feature of IP manual configuration is per-element management, which implies accessing one by one each host and/or router to be configured.

For per-element management, only a few element management methods are currently used, such as methods using the Command Line Interface (CLI) command set, methods based on configuration file editing, menu-based element management, element management methods using the SNMP (Simple Network Management Protocol) standard protocol with the Management Information Base (MIB) defining managed objects and their attributes, or Web-server based element management.

When a large-scale IP network, i.e. having a number of routers of the order of hundreds or thousands, is to be managed using the above-mentioned configuration management methods, some problems arise.

As a matter of fact, the configuration of a router includes:
- element specific values, which are relevant only for one node and have no correlation with other nodes;
- link specific values, which are relevant for the routers connected to a given link, are typical for the link and must be the same in the connected routers (for example: IP subnet mask, Open Shortest Path First (OSPF) adjacency parameters, etc.); and
- domain specific values, which are typical for a logical managed object defined in the network (such as an OSPF area, a Differentiated Services (DiffServ) domain, etc.) and which are relevant for many routers.

When the network administrator has defined the values of the attributes to be set, he has to make corresponding changes on the relevant routers. In the case of link or domain specific configuration, in a large-scale network, the following problems, detailed hereafter, arise:
- the configuration cost increases drastically,
- target identification, i.e. localisation of the elements to be configured in the network, becomes more complex,
- validation of the changes to be made is made more difficult, and
- making the element management operations from one point in the network requires a proper execution sequence but the latter becomes hard to find.

Regarding the configuration cost, assuming for example that the network administrator has to change the identifier of an OSPF area having 500 routers, even if the identifier is represented by only one attribute, the network administrator will have to change 500 attributes. This is very time-consuming.

Regarding target identification, in the above example, the network administrator has to know somehow which are the 500 routers concerned by the change. Moreover, due to the large size of the network, it is difficult to have an overview of all relationships existing between configurations. In some cases, indirect target routers may also be concerned by the change. For example, when the network administrator wants to transfer several routers from an OSPF area into another one, he has to take care to take account of all interfaces affected by the transfer in order to avoid link failures. This kind of indirect target identification can only be done by performing an analysis of the topology and of
the special characteristics of the managed object. In a large-scale network, this is not trivial.

Regarding validation, it has to be determined whether the required change leads to a valid state, i.e. whether the network with the new configuration serves its purpose. It also becomes difficult in a large-scale network, due to the fact that dozens of routers will be configured as part of a change. Performing an analysis of the new state within a reasonable amount of time is impossible.

Regarding the execution sequence issue, as for target identification and for validation, it is important to see the special characteristics of the configured managed object and the topology in order to know the effect of the changes involved by configuration. For example, when configuring an OSPF link, due to the fact that the OSPF link is established only if its attributes have the same values in each connecting interface, the sequence of setting the target interfaces is of particular relevance. The greater the number of targets, including indirect targets, the more difficult the task.

HEGERING H-G ET AL: "DESCRIBING AN OSI NETWORK CONFIGURATION. PROBLEMS AND POSSIBLE SOLUTIONS -"COMPUTER COMMUNICATION TECHNOLOGIES FOR THE 90'S. TEL AVIV, OCT. 30 - NOV. 3, 1988, PROCEEDINGS OF THE INTERNATIONAL CONFERENCE ON COMPUTER COMMUNICATION, AMSTERDAM, ELSEVIER, NL, VOL. CONF. 9, PAGE(S) 288-293 also discloses a method managing a configuration of a network having a plurality of target objects. In this article a configuration model of OSI networks is given, assuming that all objects are potential entities of the configuration. Moreover, it is also clear from the article that there is no any constrain stemming from the network topology. In reality, besides finding a sequence of target routers that provides continuous connectivity to the management centre it is also necessary to divide the target set into smaller subsets and to define partial operations with their own sequence.

The present invention aims at simplifying the configuration management process in order to overcome the above-mentioned drawbacks.

To this end, the present invention provides a method for managing configuration of a network in a management centre, the network having a plurality of target objects, remarkable in that it comprises:
elaborating a model of the network to be managed;
identifying a plurality of target objects to be configured in the network;
validating the changes to be made upon configuration of the plurality of target objects;
   and, if all changes have been validated:
   finding a sequence of target routers that provides continuous connectivity to the management centre wherein that finding step comprises dividing the plurality of target objects into smaller subsets and defining partial operations with their own sequence; and
   configuring each of the target routers.

Thus, thanks to the present invention, the network administrator can concentrate on actual network-wide object management instead of complex and time-consuming distributed, per-element implementation.

Furthermore, the per-element operations are carried out by the network management application instead of being performed by the network administrator, saving a considerable amount of time and reducing the risk of human errors.

The invention is particularly adapted to be applied to large-scale IP networks.

In a preferred embodiment, the above-mentioned model of the network is based on the CIM (Common Information Model) schema.

In a preferred embodiment, the identification step includes identifying direct target objects and indirect target objects.

In a preferred embodiment, the validation step includes checking the compliance of the changes to be made upon configuration with a predetermined set of rules.

In a preferred embodiment, the network is an IP based mobile access network.

The present invention also provides a computer program product, loadable into a computer, comprising software code portions for implementing the steps of a method as above when the product is run on a computer.

The present invention also provides an apparatus for managing configuration of a network in a management centre, the network having a plurality of target objects, remarkable in that it comprises:
a module for elaborating a model of the network to be managed;
a module for identifying a plurality of target objects to be configured in the network;
a module for validating the changes to be made upon configuration of the plurality of target objects;
a module for finding a sequence of target routers that provides continuous connectivity to the management centre and for dividing the plurality of target objects into smaller subsets and defining partial operations with their own sequence; and
a module for configuring each of the target routers.

Other features and advantages of the present invention will appear upon reading the following detailed description of a preferred embodiment, given by way of non-limiting example.

The description refers to the accompanying drawings, in which:
- Figure 1 shows the basic building blocks of a conventional DEN-based network management architecture;
- Figure 2 shows the network management architecture in accordance with the present invention, in a preferred embodiment; and
- Figure 3 illustrates the configuration operation control steps performed by the network manager application in accordance with the present invention, in a preferred embodiment.

The method and apparatus according to the present invention are based on the Directory-Enabled Networking (DEN) concept. This is an industry-standard initiative and specification for how to construct and store information about a network's users, applications and data in a central directory. DEN defines an object-oriented information model that is based on another recent standard initiative, the Common Information Model (CIM). CIM is a model for describing overall management information in a network / enterprise environment. CIM comprises a specification and a schema. The specification defines the details for integration with other management models, while the schema provides the actual model descriptions.

Both the DEN and CIM models are mapped into the directory defined as part of the Lightweight Directory Access Protocol (LDAP).

As known by a person skilled in the art, LDAP is a software protocol for enabling anyone to access a Directory service to retrieve or manipulate data stored in the Directory, e.g. data of organisations, individuals, and other resources such as files and devices, in a network.

By entering specific information about the network in the central directory using the proper mapping of a CIM model, network information then becomes available to any DEN-enabled application in the network. When a user attempts to open one of these types of applications on the network, the application checks dynamically in the LDAP global directory in order to see what the user's access privileges should be. The application can then automatically open and configure itself to provide the correct level of access to its features, based on the usage policy information it has located in the LDAP directory.

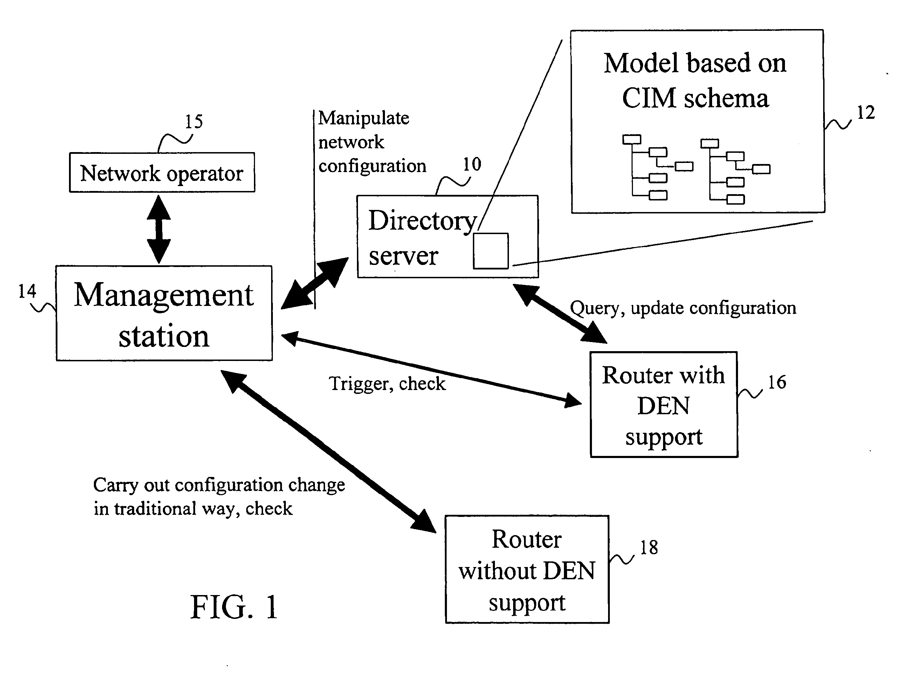

As shown in **Figure 1****,** the central part of a conventional DEN-based network management system as standardised by the DMTF (Desktop Management Task Force) is a Directory server 10.

The Directory server 10 contains management data using a CIM model 12. Such a Directory server may for example be an LDAP directory.

A management station 14, controlled by the network administrator or operator 15, contains software adapted to communicate with the Directory server 10 - not directly with the managed devices - and operates on data in order to manipulate network configuration, i.e. to make the required network configuration changes.

A router 16 with DEN support has an LDAP client and uses the same data model as the management station 14. The management station 14 triggers the router 16 to update a plurality of objects. The triggered router initiates LDAP queries to download the new configuration data and refresh its relevant objects and consequently its configuration.

For a router 18 without DEN support, legacy ways such as telnet/CLI, SNMP, etc. may be used in order to carry out the configuration changes made in the Directory server 10.

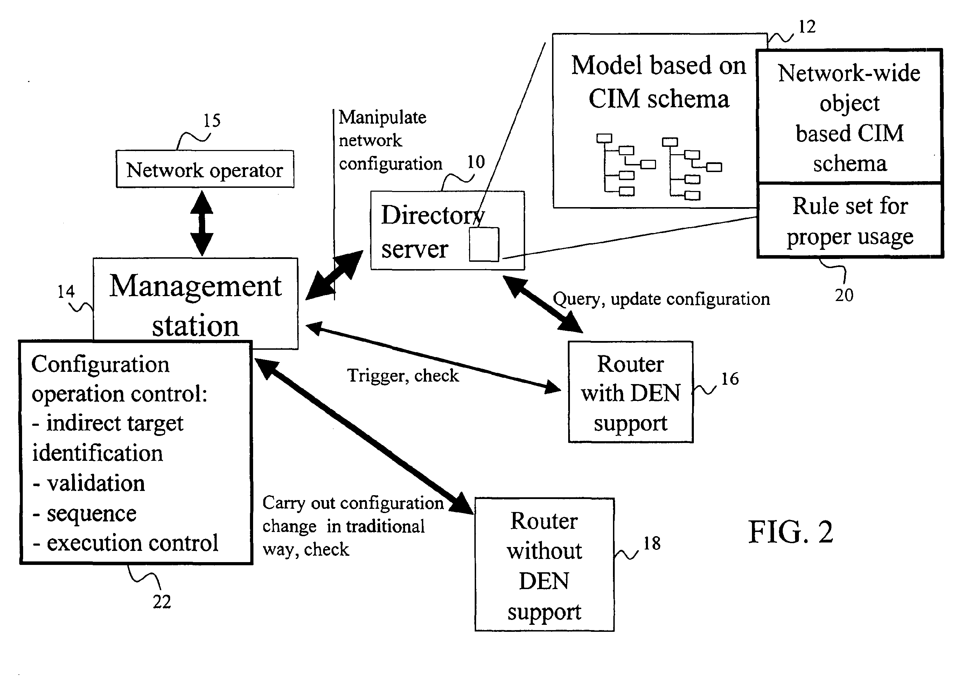

As shown in **Figure 2****,** the network configuration management method and apparatus according to the present invention improve the DEN architecture.

According to a first feature of the invention, the CIM schema models all entities in the network to be managed and the modelling of the network does not reflect the physical entities in the network, but reflects the logical management objects in the network. For example, an OSPF area is represented as one object holding its attributes, instead of having each router represented as one object holding the OSPF area parameters. The OSPF area class aggregates the interfaces that are in the same area. Therefore, if there is a configuration change in an OSPF area, the management software knows that the changed values apply to the routers having an interface associated with the changed area object. Such an approach not only reduces the network administrator's workload, but it also decreases the probability of human errors.

According to a second feature of the invention, a set of rules 20 connected to the model is generated to ensure consistency and validity of the configuration manipulations. The rule set defines how the application can create, modify or delete an object. The rules follow the behaviour of the modelled managed object. For example, a rule may state that an OSPF interface can only be created and configured on an IP interface of a router in the case where the associated router has an associated OSPF process. As another example, a rule may require that an IP interface cannot be shut down since it has an active OSPF interface, in order to ensure that the routing configuration will be valid all the time.

The rule set makes it possible to prevent the network configuration - and the network - from defining wrong or meaningless configuration changes. This is a way for the application to filter the configuration change requests before "touching" the network.

According to a third feature of the invention, a configuration operation control mechanism 22 is implemented in the management software of the management station 14. This mechanism includes identifying a plurality of target objects to be configured in the network, validating the changes to be made upon configuration of these target objects and, if all changes are validated, finding a sequence of target routers that provides continuous connectivity to the management station 14 and configuring each of the target routers.

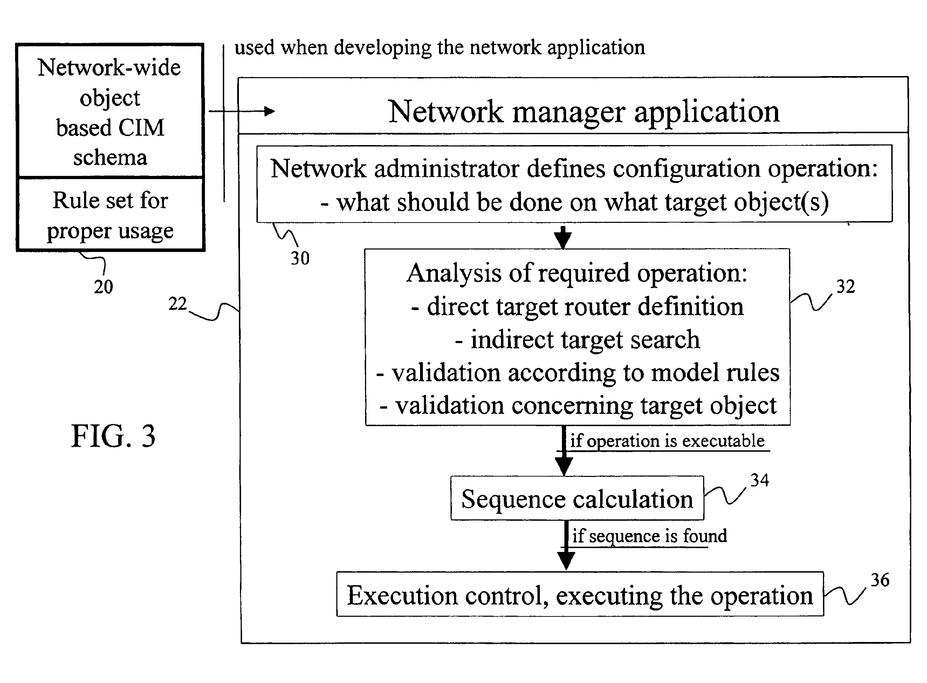

The configuration operation control mechanism 22 is illustrated in more detail in **Figure 3****.**

The network manager application, forming part of the management software contained in the management station 14, carries out the configuration operation control mechanism 22.

This is a so-called network-wide configuration operation. During a first step 30, the network administrator defines the configuration operation (e.g. reboot, stop, start, etc.) by manipulating the configuration data modelled by the network-wide CIM schema. For example, the network administrator selects an OSPF area and requests a change of this area's identification parameters.

During the next step 32, the network manager application defines the direct targets by using the model. As the model follows the logical structure of the managed objects, the direct targets can be easily identified. Following the associations between the objects in the Directory, the relevant routers can be found. For example, an object that represents an OSPF area is associated with interface objects. These interface objects are associated with router objects. For configuring this OSPF area, the network administrator selects the area and gives the new values of the attributes. The network manager application then checks the interface associations of the target OSPF area object and finds the target routers. It then knows which routers and which interfaces must be configured according to the changes in the OSPF area object. These managed objects are the direct or primary targets for the configuration operation.

For finding primary targets, as a variant, the network administrator may select one or more managed objects on the user interface provided by the application. In this case, the network administrator gives the primary targets to the application in an explicit manner.

Furthermore, during step 32, by analysing the operation of the network, the network manager application checks whether other routers are affected by the requested configuration change, i.e. it determines indirect targets.

During step 32, the network manager application also carries out a validation operation, consisting of checking the model rules to determine whether the required operation needs further consideration, and checking the validity regarding the managed object. In the example, the network manager application checks whether the operation is in compliance with the OSPF protocol.

The validation operation aims at determining whether the required changes are allowed and determining whether the new state to which the changes lead is valid. The result of the validation operation may be the rejection of the whole configuration request and the sending of a warning signal to the network administrator, indicating a possible problem. The original model must be kept and no routers are to be accessed.

The application gives to the network administrator the possibility to react in case of a warning signal. Pursuant to the network administrator's response, the application may handle the configuration request with further configuration changes.

If the operation is executable, the network manager application searches the right sequence of target routers, which makes it possible to ensure continuous connectivity with the management station 14.

If no suitable sequence is found, the application attempts to define a temporary configuration - e.g. temporary static routes - that can help to find a suitable router sequence.

The application may also attempt to divide the target set into smaller subsets and to define partial operations with their own sequence.

If no temporary solution is found, then the original model must be kept and no routers are to be accessed.

If a router sequence is found, during the following step 36, the network manager application carries out the requested element management steps by triggering the DEN routers or configuring the non-DEN routers via telnet/CLI or SNMP or by any other way found appropriate.

Any error or failure occurring during step 36 is registered in the management station 14, so that a corresponding message can be dispatched to the network administrator 15.

For example, when a target router in the sequence cannot be set successfully, the configuration process is stopped and the user is asked what to do. He has got two options:
- stop the operation at once. In such a case, there are two further options:
   - leave everything as it is, or
   - restore the original model and the original configuration in those routers which were set before the error. If an error happens during restoration, it is a fatal inconsistent state, the process is stopped immediately and the network administrator receives a warning signal.
- delay the operation until the network administrator inputs contrary instructions. For example, if the network administrator operates manually on the problematic router and solves the problem, the process can continue from where it was stopped.

It is to be noted that the defined configuration operation has to be considered as one operation, regardless of the number of target routers. In order to keep the integrity of the defined operation, the process must be considered successful if each target router is set with the new configuration. If at least one router cannot be set, then the whole operation must be considered to have failed, because part of the target routers have the new configuration and the remaining target routers have the old one.

Another requirement is that the network manager application should know the state of all managed routers, namely, which routers are successfully set during the operation, which routers were not successfully set and what managed objects have different settings than the relevant routers. Thus, the network administrator always knows the situation in the Directory and in the network configuration.

## Claims

1. A method for managing configuration of a network in a management centre (14), said network having a plurality of target objects, **characterised in that** it comprises:
elaborating a model (12) of the network to be managed;
identifying (32) a plurality of target objects to be configured in the network;
validating (32) the changes to be made on said plurality of target objects to be configured; and, if all changes have been validated:
finding (34) a sequence of target routers associated with said target objects that provides continuous connectivity to said management centre (14) wherein the finding step (34) comprises dividing the plurality of target objects into smaller subsets and defining partial operations with their own sequence ; and
configuring (36) each of said target routers.

2. A method according to claim 1, **characterised in that** said model is based on the CIM (Common Information Model) schema.

3. A method according to claim 1 or 2, **characterised in that** said identifying step (32) includes identifying direct target objects and indirect target objects.

4. A method according to claim 1, 2 or 3, **characterised in that** said validating step (32) includes checking the compliance of the changes to be made upon configuration with a predetermined set of rules.

5. A method according to any one of the preceding claims, wherein said network is an IP based mobile access network.

6. The method according to claim 1, **characterized in that** finding step (34) comprises further step of defining a temporary configuration if no suitable sequence is found.

7. A computer program product, loadable into a computer, **characterised in that** it comprises software code portions for implementing the steps of a method according to any one of the preceding claims when said product is run on a computer.

8. An apparatus for managing configuration of a network, said apparatus being located in a management centre (14), said network having a plurality of target objects, **characterised in that** it comprises:
means for elaborating a model (12) of the network to be managed;
means for identifying a plurality of target objects to be configured in the network;
means for validating the changes to be made on said plurality of target objects to be configured;
means for finding a sequence of target routers associated with said target objects that provides continuous connectivity to said management centre (14) and for dividing the plurality of target objects into smaller subsets and defining partial operations with their own sequence ; and
means for configuring each of said target routers.

9. An apparatus according to claim 7, **characterised in that** said model is based on the CIM (Common Information Model) schema.

10. An apparatus according to claim 7 or 8, **characterised in that** said identifying means are adapted to identify direct target objects and indirect target objects.

11. An apparatus according to claim 7, 8 or 9, **characterised in that** said validating means are adapted to check the compliance of the changes to be made upon configuration with a predetermined set of rules.

12. An apparatus according to any one of claims 7 to 10, wherein said network is an IP based mobile access network.

## Patentansprüche

1. Verfahren zum Verwalten der Konfiguration eines Netzes in einem Verwaltungszentrum (14), wobei das Netz eine Mehrzahl von Zielobjekten aufweist, **dadurch gekennzeichnet, dass** es umfasst:
Erstellen eines Modells (12) des zu verwaltenden Netzes;
Identifizieren (32) einer Mehrzahl von zu konfigurierenden Zielobjekten im Netz;
Bestätigen (32) der Änderungen, die an der Mehrzahl von zu konfigurierenden Zielobjekten vorzunehmen sind;
Und wenn die Aenderungen bestätigt wurden:
Ermitteln (34) einer Sequenz von mit den Zielobjekten assoziierten Zielroutern, die eine kontinuierliche Konnektivität mit dem Verwaltungszentrum (14) bereitstellt, wobei der Ermittlungsschritt (34) ein Teilen der Mehrzahl von Zielobjekten in kleinere Teilsätze und Definieren von Teiloperationen mit ihrer eigenen Sequenz umfasst; und
Konfigurieren (36) jedes der Zielrouter.

2. Verfahren nach Anspruch 1, **dadurch gekennzeichnet, dass** das Modell auf dem CIM (Allgemeinen Informationsmodell)-Schema basiert.

3. Verfahren nach Anspruch 1 oder 2, **dadurch gekennzeichnet, dass** der Identifizierungsschritt (32) ein Identifizieren von direkten Zielobjekten und indirekten Zielobjekten umfasst.

4. Verfahren nach Anspruch 1, 2 oder 3, **dadurch gekennzeichnet, dass** der Bestätigungsschritt (32) ein Prüfen der Übereinstimmung der an der Konfiguration vorzunehmenden Änderungen mit einem vorgegebenen Satz von Regeln umfasst.

5. Verfahren nach einem der vorhergehenden Ansprüche, wobei das Netz ein IP-basiertes Mobilfunkanschlussnetz ist.

6. Verfahren nach Anspruch 1, **dadurch gekennzeichnet, dass** der Ermittlungsschritt (34) ferner einen Schritt des Definierens einer temporären Konfiguration umfasst, wenn keine geeignete Sequenz ermittelt wird.

7. Computerprogrammprodukt, das auf einen Computer geladen werden kann, **dadurch gekennzeichnet, dass** es Softwarecodeabschnitte umfasst, um die Schritte eines Verfahrens nach einem der vorhergehenden Ansprüche zu implementieren, wenn das Produkt auf einem Computer ausgeführt wird.

8. Vorrichtung zum Verwalten der Konfiguration eines Netzes, wobei sich die Vorrichtung in einem Verwaltungszentrum (14) befindet und das Netz eine Mehrzahl von Zielobjekten aufweist, **dadurch gekennzeichnet, dass** sie umfasst:
Mittel zum Erstellen eines Modells (12) des zu verwaltenden Netzes;
Mittel zum Identifizieren einer Mehrzahl von zu konfigurierenden Zielobjekten im Netz;
Mittel zum Bestätigen der Änderungen, die an der Mehrzahl von zu konfigurierenden Zielobjekten vorzunehmen sind;
Mittel zum Ermitteln einer Sequenz von mit den Zielobjekten assoziierten Zielroutern, die eine kontinuierliche Konnektivität mit dem Verwaltungszentrum (14) bereitstellt, wobei der Ermittlungsschritt (34) ein Teilen der Mehrzahl von Zielobjekten in kleinere Teilsätze und Definieren von Teiloperationen mit ihrer eigenen Sequenz umfasst; und
Mittel zum Konfigurieren (36) jedes der Zielrouter.

9. Vorrichtung nach Anspruch 7, **dadurch gekennzeichnet, dass** das Modell auf dem CIM (Allgemeinen Informationsmodell)-Schema basiert.

10. Vorrichtung nach Anspruch 7 oder 8, **dadurch gekennzeichnet, dass** das Identifizierungsmittel so ausgelegt ist, dass es direkte Zielobjekte und indirekte Zielobjekte identifiziert.

11. Vorrichtung nach Anspruch 7, 8 oder 9, **dadurch gekennzeichnet, dass** das Bestätigungsmittel so ausgelegt ist, dass es die Übereinstimmung der an der Konfiguration vorzunehmenden Änderungen mit einem vorgegebenen Satz von Regeln prüft.

12. Vorrichtung nach einem der Ansprüche 7 bis 10, wobei das Netz ein IP-basiertes Mobilfunkanschlussnetz ist.

## Revendications

1. Procédé de gestion d'une configuration d'un réseau dans un centre de gestion (14), ledit réseau ayant une pluralité d'objets cibles, **caractérisé en ce que** il comprend les étapes consistant à :
élaborer un modèle (12) du réseau à gérer ;
identifier (32) une pluralité d'objets cibles à configurer dans le réseau ;
valider (32) les changements à apporter sur ladite pluralité d'objets cibles à configurer ;
et, si tous les changements ont été validés :
trouver (34) une séquence de routeurs cibles associés auxdits objets cibles qui fournisse une connectivité continue audit centre de gestion (14), moyennant quoi l'étape de découverte (34) comprend la division de la pluralité d'objets cibles en sous-ensembles plus petits et la définition d'opérations partielles avec leur propre séquence ; et
configurer (36) chacun desdits routeurs cibles.

2. Procédé selon la revendication 1, **caractérisé en ce que** ledit modèle est basé sur le schéma CIM (Common Information Model).

3. Procédé selon la revendication 1 ou 2, **caractérisé en ce que** ladite étape d'identification (32) inclut l'identifiant des objets cibles directs et des objets cibles indirects.

4. Procédé selon la revendication 1,2 ou 3, **caractérisé en ce que** ladite étape de validation (32) inclut la vérification de la conformité des changements à apporter lors de la configuration avec un jeu de règles prédéterminé.

5. Procédé selon une quelconque des revendications précédentes, moyennant quoi ledit réseau est un réseau d'accès mobile basé sur IP.

6. Procédé selon la revendication 1, **caractérisé en ce que** l'étape de découverte (34) comprend une étape supplémentaire de définition d'une configuration temporaire si aucune séquence appropriée n'est trouvée.

7. Produit de programme informatique, chargeable dans un ordinateur, **caractérisé en ce que** il comprend des portions de code logiciel pour implémenter les étapes d'un procédé selon une quelconque des revendications précédentes, lorsque ledit produit est exécuté sur un ordinateur.

8. Appareil de gestion de la configuration d'un réseau, ledit appareil étant situé dans un centre de gestion (14), ledit réseau ayant une pluralité d'objets cibles, **caractérisé en ce que** il comprend :
des moyens d'élaboration d'un modèle (12) du réseau à gérer ;
des moyens d'identification d'une pluralité d'objets cibles à configurer dans le réseau ;
des moyens de validation des changements à apporter sur ladite pluralité d'objets cibles à configurer ;
des moyens de découverte d'une séquence de routeurs cibles associés auxdits objets cibles qui fournisse une connectivité continue audit centre de gestion (14) et de division de la pluralité d'objets cibles en sous-ensembles plus petits ainsi que de définition partielle des opérations avec leur propre séquence ; et
des moyens de configuration de chacun desdits routeurs cibles.

9. Appareil selon la revendication 7, **caractérisé en ce que** ledit modèle est basé sur le schéma CIM (Common Information Model).

10. Appareil selon la revendication 7 ou 8, **caractérisé en ce que** lesdits moyens d'identification sont adaptés pour identifier des objets cibles directs et des objets cibles indirects.

11. Appareil selon la revendication 7,8 ou 9, **caractérisé en ce que** lesdits moyens de validation sont adaptés pour vérifier la conformité des changements à apporter lors de la configuration avec un jeu de règles prédéterminé.

12. Appareil selon une quelconque des revendications 7 à 10, moyennant quoi ledit réseau est un réseau d'accès mobile basé sur IP.
